(19) Europäisches Patentamt
European Patent Office
Office européen des brevets

(11) Publication number: **0 068 635**
**B1**

(12) **EUROPEAN PATENT SPECIFICATION**

(45) Date of publication of patent specification: **13.08.86**

(51) Int. Cl.$^4$: **G 02 F 1/17,** C 09 K 9/00

(21) Application number: **82302687.7**

(22) Date of filing: **25.05.82**

(54) **Electrochromic display device.**

(30) Priority: **26.05.81 JP 79911/81**
**02.10.81 JP 156971/81**
**07.12.81 JP 196623/81**

(43) Date of publication of application:
**05.01.83 Bulletin 83/01**

(45) Publication of the grant of the patent:
**13.08.86 Bulletin 86/33**

(84) Designated Contracting States:
**BE CH DE FR GB IT LI NL SE**

(56) References cited:
**FR-A-2 441 895**
**GB-A-2 047 421**

**". J. Electrochem. Soc.", Vol. 125 (1978), pp. 886-887**

(73) Proprietor: **KABUSHIKI KAISHA DAINI SEIKOSHA**
**31-1, 6-chome Kameido**
**Koto-ku Tokyo (JP)**

(72) Inventor: **Itaya, Kingo**
**2-3-12, 1-chome Maruyama**
**Tagajo-shi Miyagi-ken (JP)**
Inventor: **Shibayama, Kimio**
**1-4, 2-chome Yagiyamahoncho**
**Sendai-shi Miyagi-ken (JP)**
Inventor: **Toshima, Shinobu**
**8-8, 1-chome Yagiyamaminami**
**Sendai-shi Miyagi-ken (JP)**
Inventor: **Ataka, Tatsuaki**
**KABUSHIKI KAISHA DAINI SEIKOSHA 31-1, 6-chome**
**Kameido, Koto-ku Tokyo (JP)**
Inventor: **Iwasa, Koji**
**KABUSHIKI KAISHA DAINI SEIKOSHA 31-1, 6-chome**
**Kameido, Koto-ku Tokyo (JP)**

(74) Representative: **Caro, William Egerton et al**
**J. MILLER & CO. Lincoln House 296-302 High Holborn**
**London WC1V 7JH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 068 635 B1**

**Description**

This invention relates to electrochromic display devices.

With the advance of electronic technology recently, there is an increased demand for display devices for portable information processing instruments such as watches and electronic calculators. Liquid crystal display devices have commonly been used in such instruments. Although liquid crystal display devices have the advantages of fairly acceptable response time and fairly reliable life-span, they have the serious disadvantages for dark display and reduced visibility when viewed at an angle. To provide a display device which is free from the shortcomings of liquid crystal display devices, much research and development work has been conducted into electrochromic display devices utilizing the phenomenon that certain materials undergo a reversible colour change as a result of electrochemical oxidation and reduction. Typical examples of the electrochemical materials conventionally used is viologen which is a alkyl quaternary ammonium derivative of γ,γ'-dipyridyl, and transition metal oxides such as, for example, tungsten trioxide.

When an electrolyte solution having viologen dissolved therein is subject to electrolytic reduction, a viologen radical is formed as a coloured deposit on a cathode according to the following reaction scheme:

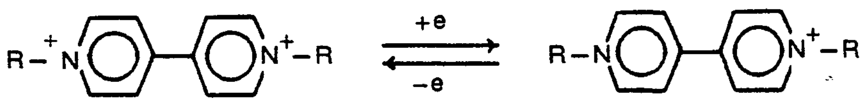


wherein R is an alkyl group. An electrochromic display device using this type of reaction has the disadvantages that the quantity of charge must be precisely controlled per unit area of the cathode to provide a uniform appearance to the display, because colour uniformity depends on the quantity of the deposit formed. Repeated oxidation-reduction cycles tend to reduce colour uniformity as the viologen itself lacks chemical stability.

An electrochromic display device using tungsten oxide as the electrochromic material, utilizes colour development by tungsten bronze produced through the reaction caused by the simultaneous introduction of electrons from an electrode and metal ions from the electrolyte solution into the layer of tungsten oxide on an electrode according to following reaction scheme:

$$WO_3 + xLi^+ \underset{-xe}{\overset{+xe}{\rightleftarrows}} Li_xWO_3$$

In order that this reaction scheme is electrochemically reversible, x should be less than or equal to 0.3 ($x \leq 0.3$). If *x* is more than 0.3 the reaction becomes irreversible and thus a suitable display device cannot be produced. Electrochromic display devices utilizing such non-stoichiometric reaction schemes are unacceptable commercially as they are difficult to drive because the reaction must always be controlled such that *x* does not lie outside the range of reversability.

GB—A—2047421 discloses that iron berlinate is an electrochemically reversible substance, but it does not disclose the absorption spectra thereof. GB—A—2047421 is concerned with the use of iron berlinate to form a counter electrode by hot-pressing a mixture of iron berlinate, graphite and polyethylene powder. The iron berlinate is not used as an electrochromic material.

An article by Vernon D. Neff entitled "Electrochemical Oxidation and Reduction of Thin Films of Prussian Blue" (J. Electrochem. Soc.: Electrochemical Science and Technology, Volume 125 (1978) pages 886—887) discloses that a Prussian Blue coated electrode is bright blue on the anodic side of the sweep (0.6 V vs. SCE (= saturated calomel electrode), whereas it is colourless on the cathodic side (0.0 V vs. SCE).

According to the present invention there is provided an electrochromic display device comprising: two substrates; a plurality of electrodes formed on one or both substrates, at least one of said electrodes being a display electrode which is coated with a layer of an electrochromic material, and an electrolyte held between said substrates, characterised in that the electrochromic material on the display electrode is a layer of iron (III) hexacyanoferrate (II) salt electrodeposited as an intimately adhering blue insoluble solid film from a solution having Fe (III) ion and hexacyanoferrate (III) ion dissolved therein.

The electrolyte may have a pH between 3 and 5.

In one embodiment, one of said electrodes is a counter electrode formed on the substrate which is opposite to the substrate on which said at least one display electrode is formed, said counter electrode having a layer of iron (III) hexacyanoferrate (II) salt.

The counter electrode may comprise a layer of iron (III) hexacyanoferrate (II) salt which is electrodeposited as an insoluble solid film from a solution containing iron (III) ion and hexacyanoferrate (III) ion.

The invention is illustrated, merely by way of example, in the accompanying drawings, in which:—

Fig. 1A illustrates the crystal lattice of insoluble Prussian blue and Figure 1B illustrates the crystal lattice of soluble Prussian blue;

Fig. 2 is a cyclic voltammogram obtained from an electrochromic display device according to the present invention having an $SnO_2$ electrode coated with about 2.5 mC/cm$^2$ of an iron (III) hexacyanoferrate (II) salt driven in 1 M KCl;

Fig. 3 shows absorption spectra obtained from an electrochromic display device according to the present invention having a transparent $SnO_2$ electrode coated with about 10.5 mC/cm$^2$ of an iron (III) hexacyanoferrate (II) salt when it is at 1.35 V, 0.65 V and −0.2 V (vs. S.C.E.) respectively;

Fig. 4 is a cyclic voltammogram of the iron (III) hexacyanoferrate (II) salt-coated electrode of an electrochromic display device according to the present invention having a peak at about 0.2 V, while the integral value of charge required for oxidation-reduction is shown by broken lines;

Fig. 5 shows reactive film retention of the iron (III) hexacyanoferrate (II) salt-coated electrode of an electrochromic display device according to the present invention at various pH's, the solid line indicating reactive film retention after $10^5$ cycles and the broken line indicating reactive film retention of a similar electrode after immersion for about 24 hours;

Fig. 6 illustrates the "bottle-neck" of Prussian blue;

Fig. 7 shows the variation of the reactive film retention for various cations;

Fig. 8 is a cyclic voltammogram obtained from an electrochromic display device according to the present invention having an iron (III) hexacyanoferrate (II) salt-coated electrode, in which (1) corresponds to the electrode in 1 M KCl and (2) and (3) correspond to the electrode in 1 M NaCl;

Fig. 9 is a cyclic voltammogram obtained from an electrochromic display device according to the present invention having an iron (III) hexacyanoferrate (II) salt-coated electrode in 0.1 N $KBF_4$, in which $Q_1$ designates the charge required for oxidation-reduction having a peak at about 0.2 V vs. S.C.E. and $Q_2$ designates the charge required for oxidation-reduction having a peak at about 0.9 V vs. S.C.E.

Fig. 10 shows the variation of the reactive film retention for various anions;

Figs. 11A and 11B are plan and cross-sectional views respectively of one embodiment of an electrochromic display device according to the present invention;

Figs. 12A and 12B are plan and cross-sectional views respectively of another embodiment of an electrochromic display device according to the present invention;

Fig. 13 illustrates a further embodiment of an electrochromic display device according to the present invention; and

Fig. 14 illustrates a yet further embodiment of an electrochromic display device according to the present invention.

An electrochromic display device according to the present invention uses a salt of iron (III) hexacyanoferrate (II) as electrochromic material, this electrochromic material being free of many disadvantages of the conventional electrochromic materials. The iron (III) hexacyanoferrate (II) salt may be included in a group of blue pigment compounds known as Prussian blue. At present, the group of compounds known as Prussian blue are generally classified into two groups, that is, insoluble Prussian blue and soluble Prussian blue:

$$Fe(III)_4[Fe(II)(CN)_6]_3 \text{ insoluble Prussian blue}$$

$$M^+Fe(III)[Fe(II)(CN)_6] \text{ soluble Prussian blue}$$

wherein $M^+$ is a monovalent cation such as $Li^+$, $Na^+$, $K^+$, $Rb^+$, $Cs^+$, $MH_4^+$, etc.

Figs. 1A and 1B show the crystal lattice of insoluble Prussian blue and soluble Prussian blue respectively, water molecules in the crystal lattice being omitted for clarity. As will be apparent, both insoluble Prussian blue and soluble Prussian blue are mixed valency complexes having a three-dimensional network structure in which a cyano group links the Fe(II) and Fe(III) atoms. The C atom of the cyano group co-ordinates with the Fe(II) atom and the N atom of the cyano group co-ordinates with Fe(III) atom. Fe atoms of different oxidation members, that is, Fe(III) and Fe(II) coexist in a common compound, and for this reason, the compound is called the mixed valency complex. The aesthetic blue colour inherent to Prussian blue is attributable to the mixed valency absorption band due to the coexistence of Fe atoms of different oxidation numbers in the single compound as described above. If all the Fe(III) atoms are reduced to Fe(II), the blue colour is lost and the compound becomes colourless while the crystal structure itself remains unchanged. The present invention is based on the principle that the valency of the Fe(III) atom in the above mentioned mixed valency complex is revesibly changed between trivalence and divalence by an electrochemical oxidation-reduction to change its colour and this reaction may be represented by the following formulae:

$$M^+Fe(III)[Fe(II)(CN)_6] + M^+ \underset{-e^-}{\overset{+e}{\rightleftarrows}} M^+_2Fe(II)[Fe(II)(CN)_6]$$
(blue) (colorless)

$$Fe(III)_4[Fe(II)(CN)_6]_3 + 4M^+ \underset{-4e^-}{\overset{+4e^-}{\rightleftarrows}} M^+_4Fe(II)_4[Fe(II)(CN)_6]_3$$
(blue) (colorless)

wherein $M^+$ represents a monovalent cation such as $Li^+$, $Na^+$, $K^+$, $Rb^+$, $Gs^+$, $NH_4^+$, etc.

Unlike the conventional viologen electrochromic materials which depend on the cyclic deposition and dissolution of a colouring species from and into a solution, an electrochromic material incorporating an iron (III) hexacyanoferrate (II) salt utilizes the colour change resulting from the electrochemical reaction of a layer of the iron (III) hexacyanoferrate (II) salt held on the surface of a display electrode as a continuous uniform thin film of an insoluble mixed valency complex having a three-dimensional lattice structure. Consequently, the colour will always develop to a given density depending on the thickness of the layer of the iron (III) hexacyanoferrate (II) salt. Furthermore, as understood from the above formulae, the reaction is not a non-stoichiometric reaction as already discussed in the case of tungsten oxide, but a stoichiometric one- or four-electron transfer reaction.

An electrochromic display device according to the present invention is easy to drive because the quantity of the charge need not be precisely controlled.

The blue pigment known as Prussian blue is chemically stable as shown by the fact that it has long been used in a wide variety of applications, for example, in paint and printing inks since its discovery in 1704. By using the iron (III) hexacyanoferrate (II) salt, an electrochromic material which is easy to drive to develop an aesthetic Prussian blue colour at a given density and which uses the particular colouring species whose chemical stability is proved by traditional usage.

By the iron (III) hexacyanoferrate (II) salt used as an electrochromic material in an electrochromic display device according to the present invention is meant that compound traditionally called insoluble Prussian blue and having the chemical formula: $Fe_4[Fe(CN)_6]_3 \cdot nH_2O$ wherein n is equal to 12 to 14. Conventionally insoluble Prussian blue may be made by mixing an aqueous hexacyanoferrate (II) ion-containing solution with an excess of an iron (III) ion-containing solution and causing insoluble Prussian blue to precipitate from the resulting solution. Conventionally, soluble Prussian blue may be made by mixing equal molar amounts of an aqueous hexacyanoferrate (II) ion-containing solution and an iron (III) ion-containing solution and causing soluble Prussian blue to precipitate from the resulting solution. Unlike these two conventional processes, in the present invention an iron (III) hexacyanoferrate (II) salt is electrochemically synthesized or electrodeposited directly on the surface of a display electrode of an electrochromic display device as an intimately adhering, continuous, uniform film. This provides a display electrode capable of electrochemically reversible colour change.

The following discussion is to demonstrate that the iron (III) hexacyanoferrate (II) salt used herein consists of insoluble Prussian blue and hence, depends on a different oxidation-reduction mechanism than soluble Prussian blue.

Fig. 2 is a cyclic voltammogram of a tin oxide ($SnO_2$) transparent electrode having a coating of about 2.5 mC/cm$^2$ of an iron (III) hexacyanoferrate (II) salt in M KCl aqueous solution. Fig. 3 shows absorption spectra of a similar electrode which is at potentials of +1.35 V, +0.65 V and −0.2 %V vs. S.C.E. and at a charge density of 10.5 mC/cm$^2$. It has been found that this electrode exhibits an absorption peak at 690 nm and is thus coloured blue when it is at a potential of +0.6 V vs. S.C.E. This spectrum having an absorption peak at 690 nm substantially agrees with that previously reported for colloidal Prussian blue. The electrode shows no absorption and is transparent when it is at about −0.2 V vs. S.C.E., and it shows a moderate absorption peak at 425 nm and is thus coloured pale brown when it is at about 1.35 V vs. S.C.E.

As seen from the cyclic voltammogram of Fig. 2, there are two peaks at about +0.2 V and +0.9 V vs. S.C.E. For each of the peaks, the electrochemical reactions involved in soluble and insoluble Prussian blue are considered below.

First, soluble and insoluble Prussian blue are compared in electrochemical reaction with respect to the peak at about +0.2 V vs. S.C.E. (saturated calomel electrode).

Reaction of soluble Prussian blue:

$$M^+Fe(III)[Fe(II)(CN)_6] + M^+ \underset{-e^-}{\overset{+e^-}{\rightleftarrows}} M^+_2Fe(II)[Fe(II)(CN)_6]\ldots$$
(blue) (colorless)

Reaction of insoluble Prussian blue:

$$Fe(III)_4[Fe(II)(CN)_6]_3 + 4M^+ \underset{-4e^-}{\overset{+4e^-}{\rightleftarrows}} M^+_4Fe(II)_4[Fe(II)(CN)_6]_3\ldots$$
(blue) (colorless)

In the above formulas, $M^+$ represents a monovalent cation such as $Li^+$, $Na^+$, $K^+$, $Rb^+$, $Cs^+$, $NH_4^+$, etc.

As seen from the above reactions, the soluble and insoluble Prussian blue give rise to electrochemical reactions which are common in that an electron or electrons and a monovalent cation or cations are simultaneously introduced into the coating.

Next, the electrochemical reactions of soluble and insoluble Prussian blues are compared with respect to the peak at +0.9 V vs. S.C.E.

Reaction of soluble Prussian blue:

$$\underset{\text{(blue)}}{M^+Fe(III)[Fe(II)(CN)_6]\,M^+} \underset{-e^-}{\overset{+e^-}{\rightleftarrows}} \underset{\text{(brown)}}{Fe(III)[Fe(III)(CN)_6]}\ldots$$

Reaction of insoluble Prussian blue:

$$\underset{\text{(blue)}}{Fe(III)_4Fe(II)(CN_6]_3 + \frac{3}{l}X^{l-}} \underset{+3e^-}{\overset{-3e^-}{\rightleftarrows}} \underset{\text{(brown)}}{Fe(III)_4[Fe(III)(CN)_6]_3 \cdot \frac{3}{l}X^{l-}}$$

In the above formulae, $X^{l-}$ represents an l-valent anion.

A comparison between the last two formulae reveals that the electrochemical reaction of soluble Prussian blue allows the $M^+$ cation and electron to move in and out of the coating whereas the electrochemical reaction of the insoluble Prussian blue allows the $X^{l-}$ anion and electrons to move in and out of the coating. In summary, soluble and insoluble Prussian blue have two significantly different features with respect to the peak at about +0.2 V and the peak at about +0.9 V vs. S.C.E. First, the peak at about +0.9 V vs. S.C.E. induces an electrochemical reaction accompanying the movement of $M^+$ cation in the case of soluble Prussian blue whereas the same peak induces another electrochemical reaction accompanying the movement of $X^{l-}$ anion in the case of insoluble Prussian blue. The second difference is the ratio of electrons associated with the peaks at about +0.2 V and +0.9 V vs. S.C.E. The electron ratio is 1:1 for soluble Prussian blue while it is 4:3 for insoluble Prussian blue. As obvious from the foregoing, it is necessary to determine whether the iron (III) hexacyanoferrate (II) salt is soluble or insoluble Prussian blue to drive an electrochromic display device using the iron (III) hexacyanoferrate (II).

As illustrated by the following examples, a proper principle for operating an iron (III) hexacyanoferrate (II) salt-coated electrode is established by definitely determining the composition of the iron (III) hexacyanoferrate (II) salt through atomic absorption and flame spectrochemical analyses, and by finding a new electrochemical oxidation-reduction mechanism through electrochemical measurements.

## Example 1

This example illustrates a process of preparing an iron (III) hexacyanoferrate (II) salt-coated electrode to be used in an electrochromic display device according to the present invention.

An aqueous solution containing 20 millimoles/litre of potassium hexacyanoferrate (III) ($K_3Fe(CN)_6$) and an aqueous solution containing 20 millimoles/litre of iron (III) chloride ($FeCl_3$) and adjusted to 0.2 N with hydrochloric acid were mixed in equal volumes to form a clear brown solution.

Immersed in this clear brown solution were a first platinum plate electrode having an area of 1 $cm^2$ which was to become an iron (III) hexacyanoferrate (II) salt-coated display electrode used in an electrochromic display device according to the present invention and a second platinum plate electrode having an area of about 10 $cm^2$ for supplying current to the display electrode. Galvanostatic electrolysis was then effected for about 10 minutes by supplying a current of 10 μA to polarize cathodically the first platinum plate electrode. After the electrolysis was complete, the first platinum plate electrode was removed from the clear brown solution to find that a contiguous, uniform, blue, insoluble solid coating had been deposited on the surface thereof.

## Example 2

In this example, the composition of the iron (III) hexacyanoferrate (II) salt was investigated.

The general procedure of Example 1 was repeated to coat an electrode with the iron (III) hexacyanoferrate (II) salt the only difference being that the electrode to be coated was a platinum plate electrode having an area of 10 $cm^2$ and galvanostatic electrolysis was effected for 10 minutes with a current of 100 μA. A blue insoluble solid coating was formed on the platinum plate electrode and used as a sample for analysis. The insoluble solid coating was dissolved in 28% aqueous ammonia, neutralized with 1/1 hydrochloric acid/water, and diluted to 100 $cm^3$ with water to prepare a sample solution for analysis. Flame spectrochemical analysis was used to determine potassium content and atomic absorption analysis was used to determine iron content.

Another electrode coated with the iron (III) hexacyanoferrate (II) salt was prepared separately for analysis. With this electrode placed in an aqueous solution of 1 M KCl at pH 4.0, cyclic voltammogram was measured to determine the quantity of charge used in oxidation-reduction reaction at a peak at about +0.2 V vs. S.C.E.

Table 1 shows the quantities of potassium and iron determined by flame spectrochemical and atomic absorption analyses in combination with the corresponding quantity of electric charge.

TABLE 1

unit: µg/mC

| | Found | Calculated for $Fe_4[Fe(CN)_6]_3$ | Calculated for $KFe[Fe(CN)_6]$ |
|---|---|---|---|
| Fe | 1.02 | 1.01 | 1.16 |
| K | 0.06 | 0 | 0.41 |

As seen from Table 1, the iron (III) hexacyanoferrate (II) salt produced by the described electrolytic process is a so-called "insoluble Prussian blue" and has the formula: $Fe_4[Fe(CN)_6]_3$.

Example 3

This example was carried out to determine the optimum pH range for an electrolyte to be combined with the iron (III) hexacyanoferrate (II) salt-coated electrode in an electrochromic display device according to the present invention.

Fig. 4 is a cyclic voltammogram of the iron (III) hexacyanoferrate (II) salt coated electrode in 1 M KCl aqueous solution, showing a peak at about 0.2 V vs. S.C.E. The quantity of charge required for oxidation-reduction reaction at about 0.2 V vs. S.C.E. was measured by means of a coulometer and this is shown in Figure 4 by broken lines. These broken lines show how the quantity of charge varies in successive cycles when the iron (III) hexacyanoferrate (II) salt-coated electrode is driven by applying a voltage of 1 Hz at stepped potentials between 0.6 V and −0.2 V vs. S.C.E. The variation of quantity of charge may be used as a measure of evaluating the stability of the iron (III) hexacyanoferrate (II) coating, and the reactive film retention is defined as follows.

$$\text{Reactive film retention} = \frac{\text{Quantity of charge required in a given cycle}}{\text{Quantity of charge required in the first cycle}} \times 100\%$$

This reactive film retention was used to determine an adequate pH range of an electrolyte of an electrochromic display device according to the present invention. In this experiment, aqueous solutions of 1 M KCl were prepared and adjusted to varying pH's with hydrochloric acid, and the reactive film retention was determined after $10^5$ cycles for each solution. The results are shown in Fig. 5, in which a solid line shows how the reactive film retention varies with pH when the electrodes are driven and a broken line shows how the reactive film retention varies with pH when the electrodes are immersed. As seen from Fig. 5, an iron (III) hexacyanoferrate (II)-coated electrode should be driven at optimum pH in the range between 3 and 5. The iron (III) hexacyanoferrate (II)-coated electrode cannot be stably driven at higher than pH 5 because of dissolution of the coating and lower than pH 3 because of invasion of protons into the coating.

Example 4

This example is carried out to select a proper cation of an electrolyte to be used with the iron (III) hexacyanoferrate (II) salt-coated electrode in an electrochromic display device according to the present invention.

As previously mentioned, the peak at about 0.2 V vs. S.C.E. is related to the movement of cations into and out of the coating. As shown in Fig. 1, the iron (III) hexacyanoferrate (II) salt is of a substantially open structure having a lattice constant of 10.2 Å and any cations seem to move freely into and out of such an open structure. However, when the dimensions of the atoms are taken into account, a "bottle-neck" having a diameter of 3.5 Å as shown in Fig. 6 is produced. This bottle-neck will limit the cations capable of moving into and out of the coating.

In this example, electrolytes having different cations are used to determine those which are acceptable. The iron (III) hexacyanoferrate (II) salt-coated electrode was prepared as in Example 1 and evaluation was made in terms of the reactive film retention as in Example 3. The electrolytes used were alkali metal chlorides, specifically LiCl, NaCl, KCl, RbCl, and CsCl, an alkaline earth metal chloride, specifically, $BaCl_2$, and an ammonium salt, specifically $NH_4Cl$. These aqueous electrolytic solutions were adjusted to pH 4.0 and to a concentration of 0.1 N with hydrochloric acid in accordance with Example 3. It was found that $K^+$, $Rb^+$, $Cs^+$ and $NH_4^+$ ions provide for stable colouring/bleaching of the coating as seen in Fig. 7.

In conjunction with the above results, the radius of a crystallized ion and the Stokes' ionic radius which is one of the measures of the radius of a hydrated ion are shown for various ions in Table 2. As seen from this Table, the Stokes' ionic radius of those cations capable of stable driving is in good agreement with the bottle-neck diameter of 1.75 Å of the iron (III) hexacyanoferrate (II) salt.

TABLE 2

| Ion | Radius of crystallized ion (Å) | Stokes' ionic radius (Å) |
|---|---|---|
| $H^+$ | 1.14 | — |
| $Li^+$ | 0.60 | 2.37 |
| $Na^+$ | 0.95 | 1.87 |
| $K^+$ | 1.33 | 1.25 |
| $Rb^+$ | 1.48 | 1.18 |
| $Cs^+$ | 1.69 | 1.19 |
| $NH_4^+$ | 1.48 | 1.25 |
| $Ba^{2+}$ | 1.35 | 2.88 |

Example 5

This example is to show that the peak at about 0.9 V vs. S.C.E. in the cyclic voltammogram does not correspond to the electrochemical reaction based on the movement of cations into and out of the iron (III) hexacyanoferrate (II) salt-coated film. A comparison of the quantity of charge in the electrode reaction associated with the peak at about 0.2 V vs. S.C.E. with the quantity of charge in the electrode reaction at about 0.9 V vs. S.C.E. will prove that the electrochemical reaction at 0.9 V vs. S.C.E. is based on the movement of anions into and out of the insoluble Prussian blue layer.

Fig. 8 shows a cyclic voltammogram of an iron (III) hexacyanoferrate (II) salt-coated electrode. Curve (1) in Fig. 8 is a stable cyclic voltammogram of the electrode at about 0.2 V vs. S.C.E. in 1 M KCl aqueous solution, and this is an electrode reaction based on the movement of $K^+$ ions as described in Example 4. Curves (2) and (3) in Fig. 8 show cyclic voltammograms of the electrode in 1 M NaCl. Curve (2) shows that the electrode reaction at about 0.9 V vs. S.C.E. is stable and reversible, and curve (3) shows that the electrode reaction at about 0.2 V vs. S.C.E. give rise to irreversible failure of the coating after one cycle of potential scanning. The reaction of curve (3) is based on the movement of cations into and out of the coating as described above and in this case, it results in failure of the coating because the Stokes' radius of an $Na^+$ ion is larger than the bottle-neck diameter of a Prussian blue crystal lattice. The reaction of curve (2) is reversible unlike the reaction of curve (3), which indicates that this electrode reaction is not based on the movement of $Na^+$ ion into and out of the coating. Accordingly, the electrochemical reaction represented by the cyclic voltammogram having a peak at about 0.9 V vs. S.C.E. is not based on the movement of cations into and out of the Prussian blue coating, but probably on the movement of anions.

Further, in Fig. 9, a solid curve shows a cyclic voltammogram of the iron (III) hexacyanoferrate (II) salt coating on a tin oxide transparent electrode which is placed in an aqueous electrolyte solution of 0.1 N $KBF_4$, and broken lines show how the quantity of charge representative of the extent of electrode reaction varies. The quantity of charge is measured as an integral of electrode current. In Fig. 9, $Q_1$ is the quantity of charge representative of the extent of an electrode reaction having a peak at about 0.2 V vs. S.C.E., that is, the reacting weight according to formula (1) or (1'). $Q_2$ is the quantity of electricity representative of the extent of an electrode reaction having a peak at about 0.9 V vs. S.C.E., that is, the reacting weight according to formula (2) or (2'), provided that this electrode reaction is based on the movement of anions into and out of the coating as speculated from the data shown in Fig. 8.

TABLE 3
Comparison between $Q_1$ and $Q_2$

| | Found | Calculated for $Fe_4[Fe(CN)_6]_3$ | Calculated for $KFe[Fe(CN)_6]$ |
|---|---|---|---|
| $Q_2/Q_1$ | .744 | $\frac{3}{4} = 0.75$ | $\frac{1}{1} = 1.0$ |

The ratio of $Q_2$ to $Q_1$ measured in Fig. 9, the ratio of reacting weights calculated from reaction formulae (1′) and (2′) when the coating is insoluble Prussian blue ($Fe^{III}_4[Fe^{II}(CN)_6]_3$), and the ratio of reacting weights calculated from reaction formulae (1) and (2) when the coating is soluble Prussian blue ($KFe^{III}[Fe^{II}(CN)_6]$) are summarized in Table 3. As seen from this data, a reasonable ground supports the conclusion that the electrode reaction exhibting a peak at about 0.9 V vs. S.C.E. on the cyclic voltammogram is a reaction associated with anions if the coating is a film of insoluble Prussian blue.

Example 6

This example is carried out to select an optimum anion for an electrolyte taking the result of Example 5 into account.

An iron (III) hexacyanoferrate (II) salt-coated electrode was prepared as described in Example 1, and the evaluation of anions was made on the basis of reactive film retention as in Example 3. However, the reactive film retention based on charge does not ensure a precise comparison because the residual current has a considerable influence at potentials in excess of 1.0 V vs. S.C.E. in the case of a particular electrolyte. Thus, reactive film retention as defined below is used as an index for evaluating the electrolyte anions. That is, the ratio of peak currents at about 0.9 V vs. S.C.E. is used in this example.

$$\text{Reactive film retention} = \frac{\text{Peak current after a given number of cycles}}{\text{Peak current in the first cycle}} \times 100\%$$

The stepping waveform used for evaluation had a driving waveform between 0.6 V and 1.4 V vs. S.C.E. having a frequency of 1 Hz. The electrolytes used were KCl, KF, $KPF_6$, $KNO_3$, $KClO_4$, $CH_3COOK$, $K_2SO_4$ and $KBF_4$.

Fig. 10 shows the reactive film retention obtained for various anions having a peak at 0.9 V vs. S.C.E. in the cyclic voltamograms of the electrodes until $10^3$ cycles.

Table 4 shows the Stokes' ionic radii of various ions.

TABLE 4

| Ion | Stokes' ionic radius (Å) | Coating Stability |
|---|---|---|
| $F^-$ | 1.67 | |
| $Cl^-$ | 1.20 | 0 |
| $NO_3^-$ | 1.29 | 0 |
| $ClO_4^-$ | 1.36 | 0 |
| $BF_4^-$ | — | |
| $PF_6^-$ | — | × |
| $CH_3COO^-$ | 2.24 | × |
| $SO_4^{2-}$ | 1.15 | 0 |

As seen from Fig. 9 and Table 4, the anions which allow the iron (III) hexacyanoferrate (II) salt-coated electrode to be operated in a stable manner are properly selected on the basis of the Stokes' radius of an anion and the bottle-neck diameter of a crystal lattice of the iron (III) hexacyanoferrate (II) salt as done in the case of cations.

Example 7

This example aims at providing a further precise principle of colouring/bleaching the iron (III) hexacyanoferrate (II) salt-coated electrode of an electrochromic display device according to the present invention of the basis of a discovery obtained by repeating colouring/bleaching of the electrode between blue and colourless states and thereafter analyzing the composition of the coating.

The general procedure of Example 2 was repeated. The coating on the electrode was analyzed for composition both immediately after the preparation and after colouring/bleaching of the electrode was performed several cycles in an aqueous solution of 1 M KCl.

TABLE 5
Composition Distribution

unit: µg/mC

| | As Prepared | After Several Cycles |
|---|---|---|
| Fe | 1.02 | 1.01 |
| K | 0.06 | 0.30 |

As seen from Table 5, a comparison between the analytical values of blue coloured coatings after several cycles of colouring/bleaching and as prepared reveals that the potassium content of the coating increases after several cycles. This means that potassium ions and electrons are simultaneously introduced into the coating during bleaching, and further driving of the coating in a colouring direction is accompanied with not only the movement of potassium ions and electrons out of the coating, but also the movement of chloride ions (anions) into and electrons out of the coating as shown by the following formula:

$$Fe_4[Fe(CN)_6]_3 + 4K^+ \underset{-4e^-}{\overset{+4e^-}{\rightleftarrows}} K^+_4Fe_4[Fe(CN)_6]_3$$

$$K^+_4Fe_4[Fe(CN)_6]_3 \underset{-xK^+ + (4-x)Cl^-}{\overset{-4e^-}{\rightleftarrows}} K^+_{(4-x)}Fe_4[Fe(CN)_6]_3 - (4-x)Cl^-$$

This will be more generally expressed by the reaction:

$$M^+_mFe^{III}_4[Fe^{II}(CN)_6]_3 \cdot \frac{m}{l}X^{l-} + xM^+ \left(\frac{4-x}{l}\right)X^{l-} \underset{-4e^-}{\overset{4e^-}{\rightleftarrows}}$$

$$M^+_{(m+x)}Fe^{II}_4[Fe^{II}_4(CN)_6]_3 \cdot \left(\frac{m+x-4}{l}\right) X^{l-}$$

Where $M^+$, $X^{l-}$, m, and x are defined as follows:
$M^+$: a monovalent cation, $K^+$, $Rb^+$, $Cs^+$, $NH_4^+$, etc.
$X^{l-}$: an l-valent anion, $BF_4^-$, $SO_4^{2-}$, $ClO_4^-$, etc.
m: 0, 1, 2, 3, 4 or 5.
l: 1 or 2.
x: the number of cations moving into and out of the coating.

Furthermore, the presence of eight sub-lattices in the crystal lattice of Prussian blue and other factors impose the following restriction to m, l, and x. That is, m, l, and x should simultaneously satisfy the three inequalities:

① $0 \leqq \frac{(l+1)m}{l} \leqq 8$ ② $0 \leqq \frac{(l+1)(m+x)-4}{l} \leqq 8$ ③ $0 \leqq \frac{(m+x-4)}{l}$

## Example 8

This example aims at providing a novel principle of colouring/bleaching the iron (III) hexacyanoferrate (II) salt-coated electrode between blue and brown coloured states by making investigations as described in Example 7, on the peak at about 0.9 V vs. S.C.E. in the cyclic voltammogram.

The oxidation-reduction mechanism at the peak at about 0.9 V may be represented by the reaction:

$$M^{+}{}_{m}Fe^{III}{}_{4}[Fe^{II}(CN)_6]_3 \cdot \frac{m}{l} X^{l-} + yX^{l-} - (3\text{-}ly)M^{+} \underset{-3e^-}{\overset{3e^-}{\rightleftarrows}} M_{m(m+ly-3)}Fe^{III}{}_{4}[Fe^{III}(CN)_6]_3 \cdot \frac{(m+ly)}{l} X^{l-}$$

Where $M^+$, $X^{l-}$, m, and y are defined as follows:

$M^+$: a monovalent cation, $K^+$, $Rb^+$, $Cs^+$, $NH^{4+}$, etc.

$X^{l-}$: an l- valent anion, $BF_4^-$, $SO_4^{2-}$, $ClO_4^-$, etc.

m: 0, 1, 2, 3, 4 or 5.

l: 1 or 2.

y: the number of anions moving into and out of the coating film.

## Example 9

An electrochromic display device as shown in Figures 11A and 11B was used in this example. A patterned tin oxide transparent conductive film 18 was formed on a glass substrate 17, and a layer 19 of iron (III) hexacyanoferrate (II) was electrodeposited on a display portion of the transparent conductive film by a method as described in Example 1.

During this electrodeposition, the remaining portion of the transparent conductive film 18 other than the display portion was previously masked through the application of an adhesive cellophane tape to prevent the electrochromic material from being deposited thereon. A conductive film 21 of platinum was sputtered on the surface of a lower glass substrate 20. Conductive film 21 was coated on the surface with a layer 22 of iron (III) hexacyanoferrate (II) salt in the same manner as the display portion. An electrolyte solution 23 was a solution of 1 M potassium chloride in 0.001 N hydrochloric acid. A porous polytetrafluoroethylene sheet 24, for example such as that sold under the Trade Mark TEFLON, was immersed in the electrolyte solution as a background plate to constitute a white background for the display. The cell was sealed along its periphery with a layer 25 of epoxy resin. A voltage source 16 was connected to the two electrodes through a double throw switch 15 to operate the display device at a voltage of 0.8 V.

When the contacts of the switch 15 were positioned at A, a negative voltage of −0.8 V was applied to the display electrode with respect to the counter electrode, and the layer 19 of the iron (III) hexacyanoferrate (II) salt was changed into a colourless state so that the display disappeared. When the switch 15 was changed to C, the display electrode was at a potential of 0 V with respect to the counter electrode, and the layer 19 turned blue to establish a display. Furthermore, when the switch 15 was changed to B, the electric circuit was opened and no voltage was applied to the display electrode. The colour of the layer 19 remained unchanged so that either a coloured state or a bleached state was maintained depending on the state of the layer immediately before switching. Consequently, the display was memorized.

## Example 10

Figs. 12A and 12B are plan and cross-sectional views of another embodiment of an electrochromic display device according to the present invention having an eight-segment numerical display. A tin oxide transparent conductive film 118 on an upper glass substrate 117 was provided with a pattern of predetermined configuration by photolithography. A lead portion of the transparent conductive film other than a display portion was masked by vapour depositing an insulating layer 126 of silicon dioxide before a layer 119 of potassium iron (III) hexacyanoferrate (II) was electrodeposited on the display portion. On a lower glass substrate 120, an electrode was formed as the counter electrode by coating a sputtered platinum layer 121 with a layer 122 of potassium iron (III) hexacyanoferrate partially containing reduced $K_2Fe(II)[Fe(II)(CN)_6]$. Such a cell was filled with a solution of 1 M potassium chloride in 0.1 N hydrochloric acid as an electrolyte 123, equipped with a white background plate 124 of porous polytetrafluoroethylene, such as that sold under the Trade Mark TEFLON, and sealed along its periphery with a layer 125 of epoxy resin. For electrical connection to the sputtered platinum layer 121, i.e., the counter electrode, a conductive layer 127 of silver-dispersed conductive resin was formed in the epoxy resin layer 125 at a corner of the cell to electrically connect the tin oxide conductive film on the upper glass substrate to the patterned lead portion of the counter electrode.

Though, not shown in Figures 12A and 12B, the resulting electrochromic display device was connected to a drive unit including a power supply, switching means for electronically switching polarity, and a logic circuit coupled with the switching means for selecting the polarity of the eight display electrodes among

the positive electrode, negative electrode and open circuit in accordance with a numeral to be displayed. The electrochromic display device was operated by applying a voltage of 1 V. It was found that any desired numeral could be displayed in an aesthetic blue colour by arbitrarily switching electrical connections.

Example 11

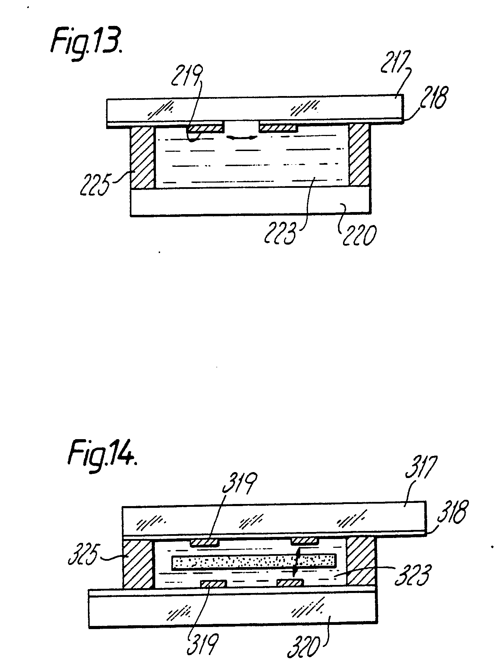

It is to be noted that the electrode arrangement of an electrochromic display device according to the present invention is not limited to the embodiments shown in Figs. 11A and 11B and Figs. 12A and 12B. Other embodiments are illustrated in Fig. 13 and Fig. 14. In these embodiments the counter electrode is removed. In the embodiment shown in Fig. 13 a plurality of display electrodes consisting of a conductive film 218 on which is formed a layer 219 of iron (III) hexacyanoferrate (II) are formed on a first substrate 217. An electrolyte 223 is held between the first substrate 217 and a second substrate 220, the substrate being sealed by a layer 225 similar to the layer 25. The charge which causes electrochemical oxidation and reduction reaction of the iron (III) hexacyanoferrate (II) transfers between the display electrodes (as shown by arrow) so as to provide a visible display.

In the embodiment shown in Fig. 14 a plurality of display electrodes consisting of a conductive film 318 on which is formed a layer 319 of iron (III) hexacyanoferrate (II) are formed on both a first substrate 317 and a second substrate 320. An electrolyte 323 is held between the substrates which are sealed by a layer 325 similar to the layer 25. The charge which causes colour change of the iron (III) hexacyanoferrate (II) transfers between the display electrodes on the first substrate and the display electrode on the second electrode (as shown by arrow) so as to provide for display.

**Claims**

1. An electrochromic display device comprising: two substrates (17, 20; 117, 120; 217, 220; 317, 320); a plurality of electrodes (18, 21; 118, 21; 218, 319) formed on one or both substrates, at least one of said electrodes being a display electrode (18; 118; 218; 318) which is coated with a layer of an electrochromic material (19; 119; 219; 319), and an electrolyte (23; 123; 223; 323) held between said substrates, characterised in that the electrochromic material on the display electrode is a layer of iron (III) hexacyanoferrate (II) salt electrodeposited as an intimately adhering blue insoluble solid film from a solution having Fe (III) ion and hexacyanoferrate (III) ion dissolved therein.

2. An electrochromic display device as claimed in claim 1 characterised in that the electrolyte (23, 123, 223, 323) has a pH value between 3 and 5.

3. An electrochromic display device as claimed in claim 1 or 2 characterised in that one of said electrodes is a counter electrode (21, 121) formed on the substrate (20, 120) which is opposite to the substrate (17, 117) on which said at least one display electrode (18, 118) is formed, said counter electrode (21, 121) having a layer of iron (III) hexacyanoferrate (II) salt.

4. An electrochromic display device as claimed in claim 3 characterised in that the counter electrode (21, 121) comprises a layer of iron (III) hexacyanoferrate (II) salt which is electrodeposited as an insoluble solid film from a solution containing iron (III) hexacyanoferrate (III) ion.

**Patentansprüche**

1. Elektrochromes Anzeigegerät, bestehend aus zwei Substraten (17, 20; 117, 120; 217, 220; 317, 320), einer Mehrzahl auf einem oder beiden Substraten gebildeter Elektroden (18, 21; 118; 21; 218, 319), wobei mindestens eine dieser Elektroden eine mit einer Schicht elektrochromen Materials (19; 119; 219; 319) überzogene Anzeigeelektrode (18; 118, 218; 318) ist, und einem zwischen diesen Substraten angeordneten Elektrolyten (23; 123; 223; 323), dadurch gekennzeichnet, dass das elektrochrome Material auf der Anzeigeelektrode eine Schicht aus als dicht anhaftender, blauer unlöslicher fester Film aus einer Lösung mit darin gelösten Fe(III)-ionen und Hexacyanoferrat(III)-ionen galvanisch abgeschiedenem Eisen(III)-hexacyanoferrat(II)-salz ist.

2. Elektrochromes Anzeigegerät nach Anspruch 1, dadurch gekennzeichnet, dass der Elektrolyt (23, 123, 223, 323) einen pH-Wert zwischen 3 und 5 aufweist.

3. Elektrochromes Anzeigegerät nach Anspruch 1 oder 2, dadurch gekennzeichnet, dass eine dieser Elektroden eine Gegenelektrode (21, 121) ist, die auf dem Substrat (20, 120) gebildet ist, welches dem Substrat (17, 117) mit der darauf gebildeten, mindestens einen Anzeigeelektrode (18, 118) gegenüberliegt, wobei diese Gegenelektrode (21, 121) eine Schicht aus Eisen(III)-hexacyanoferrat(II)-salz aufweist.

4. Elektrochromes Anzeigegerät nach Anspruch 3, dadurch gekennzeichnet, dass die Gegenelektrode (21, 121) aus einer Schicht aus als unlöslicher fester Film aus einer Eisen(III)-ionen und Hexacyanoferrat(III)-ionen enthaltenden Lösung galvanisch abgeschiedenem Eisen(III)-hexacyanoferrat(II)-salz besteht.

**Revendications**

1. Un dispositif d'affichage électrochromique comprenant: deux substrats (17, 20; 117, 120; 217, 220; 317, 320); une pluralité d'électrodes (18, 21; 118, 21; 218, 319) formées sur un ou deux substrats, avec au

moins l'une des deux électrodes qui est une électrode d'affichage (18, 118, 218, 318) qui est revêtue d'une couche d'un matériau électrochromique (19; 119; 219; 319), et un électrolyte (23; 123; 223; 323) maintenu entre lesdits substrats, caractérisé en ce que le matériau électrochromique sur l'électrode d'affichage est une couche de sel hexacyanoferrate (II) de fer (III) électrodéposée sous forme d'un film solide insoluble bleu adhérent de façon intime, à partir d'une solution contenant l'ion Fe (III) et l'ion hexacyanoferrate (III), en solution.

2. Un dispositif d'affichage électrochromique selon la revendication 1, caractérisé en ce que l'électrolyte (23, 123, 223, 323) a une valeur de pH comprise entre 3 et 5.

3. Un dispositif d'affichage électrochromique selon la revendication 1 ou 2, caractérisé en ce que l'une desdites électrodes est une contre-électrode (21, 121) formée sur le substrat (21, 120) qui est opposé au substrat (17, 117) sur lequel au moins l'une desdites électrodes d'affichage (18, 118) est formée, ladite contre-électrode (21, 121) ayant une couche de sel hexacyanoferrate (II) de fer (III).

4. Un dispositif d'affichage électrochromique selon la revendication 3, caractérisé en ce que la contre-électrode (21, 121) comprend une couche de sel hexacyanoferrate (II) de fer (III) qui est électrodéposée sous forme de film solide insoluble à partir d'une solution contenant l'ion fer (III) et l'ion hexacyanoferrate (III).

Fig.1A.

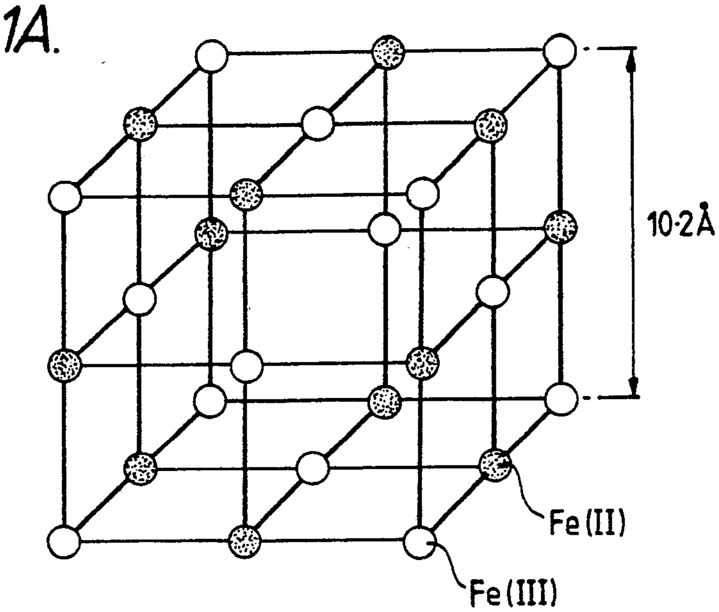


Fig.1B.

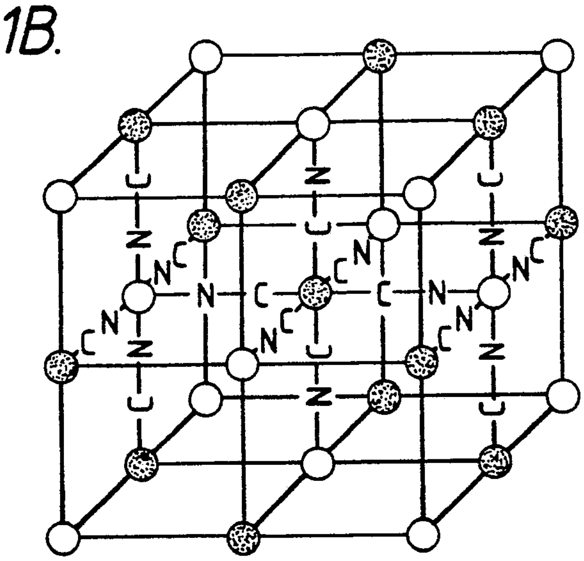

Fig.2.

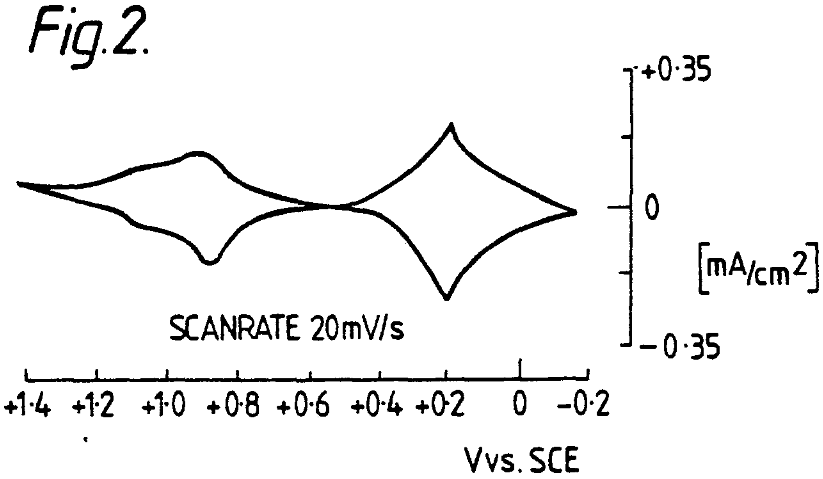
+0·35
0
[mA/cm2]
-0·35
SCANRATE 20mV/s
+1·4 +1·2 +1·0 +0·8 +0·6 +0·4 +0·2 0 -0·2
Vvs. SCE

Fig.3.

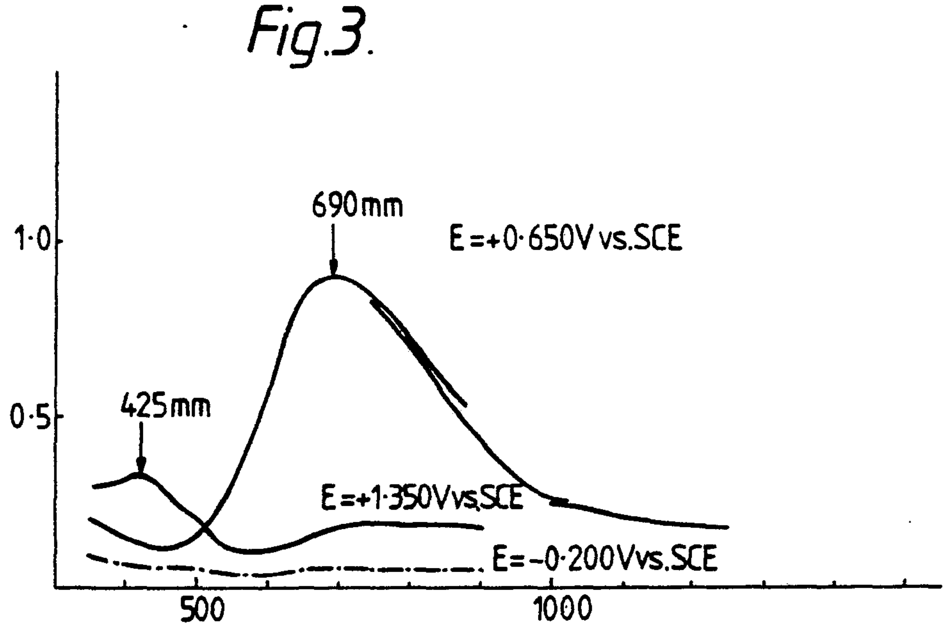
690mm
E=+0·650V vs.SCE
1·0
0·5
425mm
E=+1·350Vvs.SCE
E=-0·200Vvs.SCE
500
1000

Fig.4.

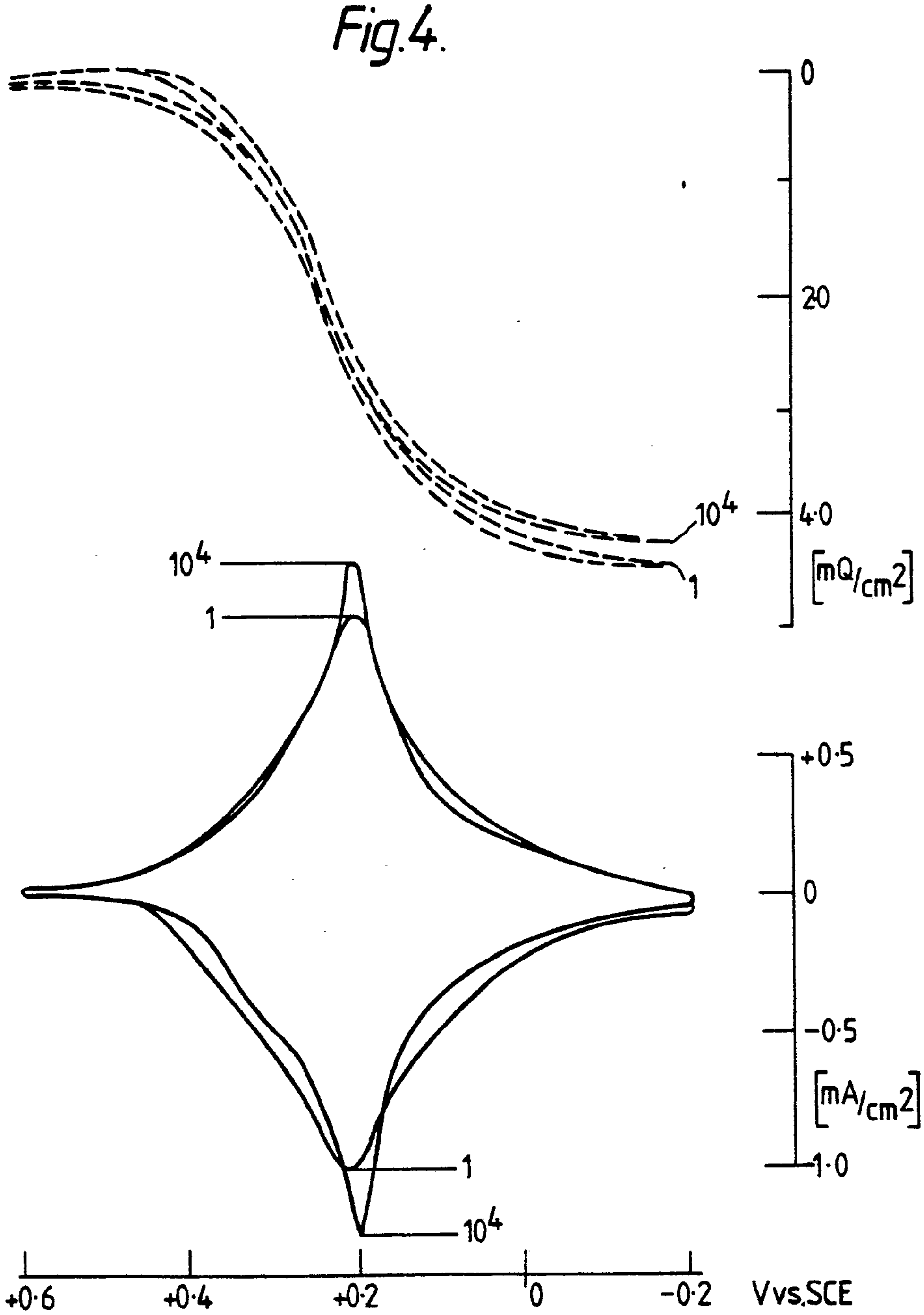

Fig.5.

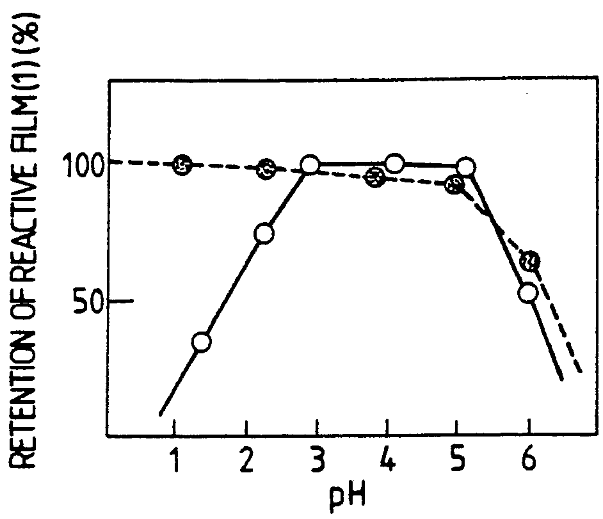
RETENTION OF REACTIVE FILM(1) (%)
100
50
1
2
3
4
5
6
pH

Fig.6.

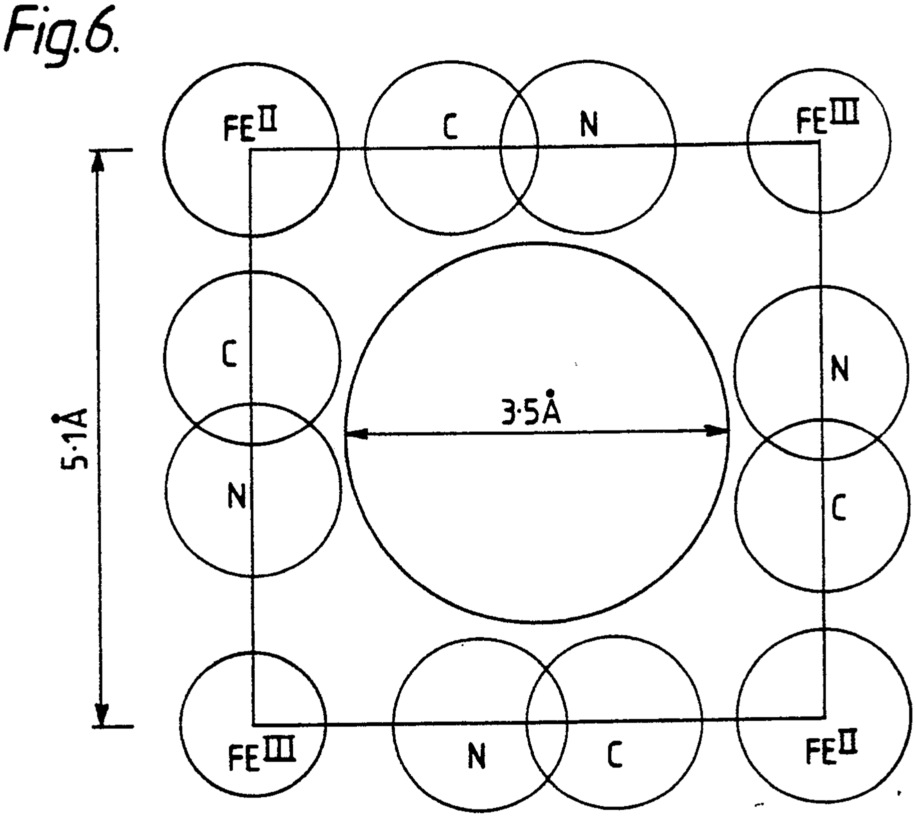
FE II
C
N
FE III
C
N
3·5Å
N
C
5·1Å
FE III
N
C
FE II

Fig.7

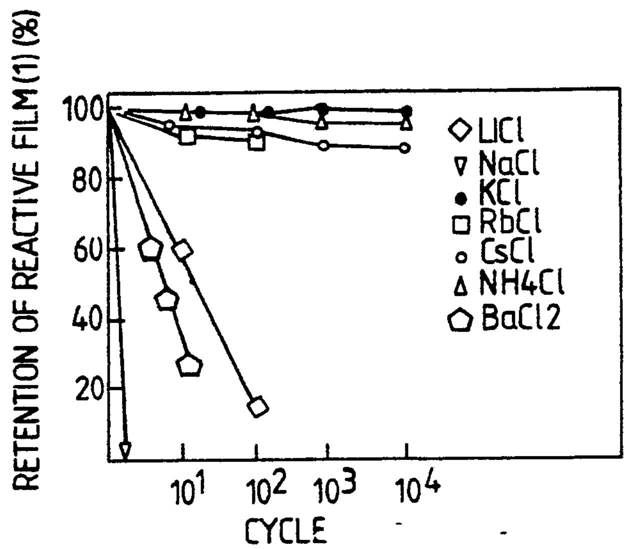
RETENTION OF REACTIVE FILM(1)(%)
100
80
60
40
20
$10^1$ $10^2$ $10^3$ $10^4$
CYCLE
LiCl
NaCl
KCl
RbCl
CsCl
NH4Cl
BaCl2

Fig.8.

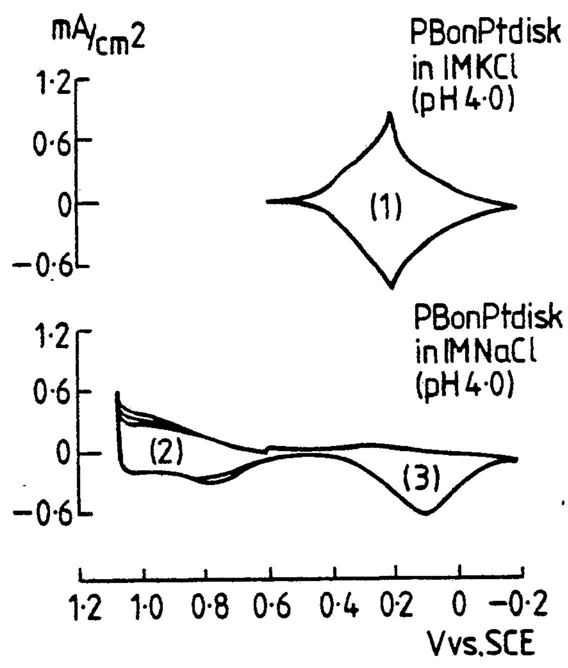
mA/cm2
PBonPtdisk in IMKCl (pH 4·0)
1·2
0·6
0
−0·6
(1)
PBonPtdisk in IMNaCl (pH 4·0)
(2)
(3)
1·2 1·0 0·8 0·6 0·4 0·2 0 −0·2
Vvs.SCE

Fig.9.

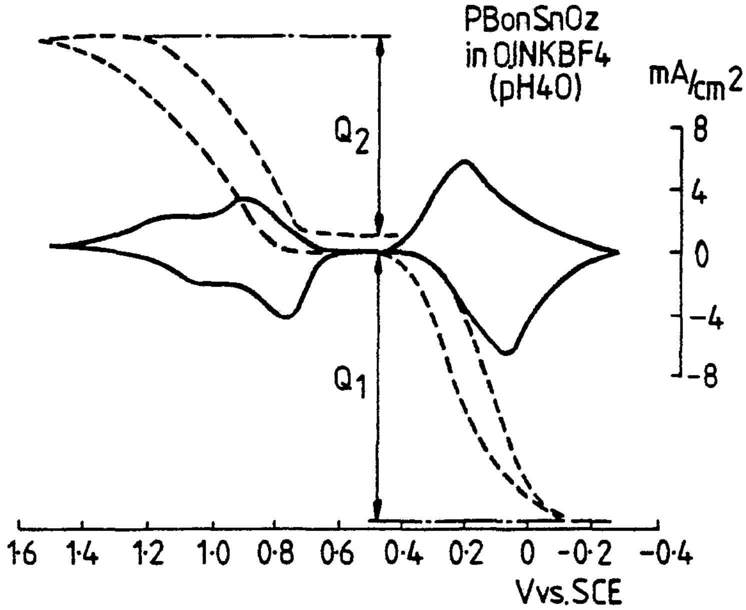
PBonSnO2
in 0.1NKBF4
(pH4.0)
mA/cm2
8
4
0
-4
-8
Q2
Q1
1·6 1·4 1·2 1·0 0·8 0·6 0·4 0·2 0 -0·2 -0·4
Vvs.SCE

Fig.10.

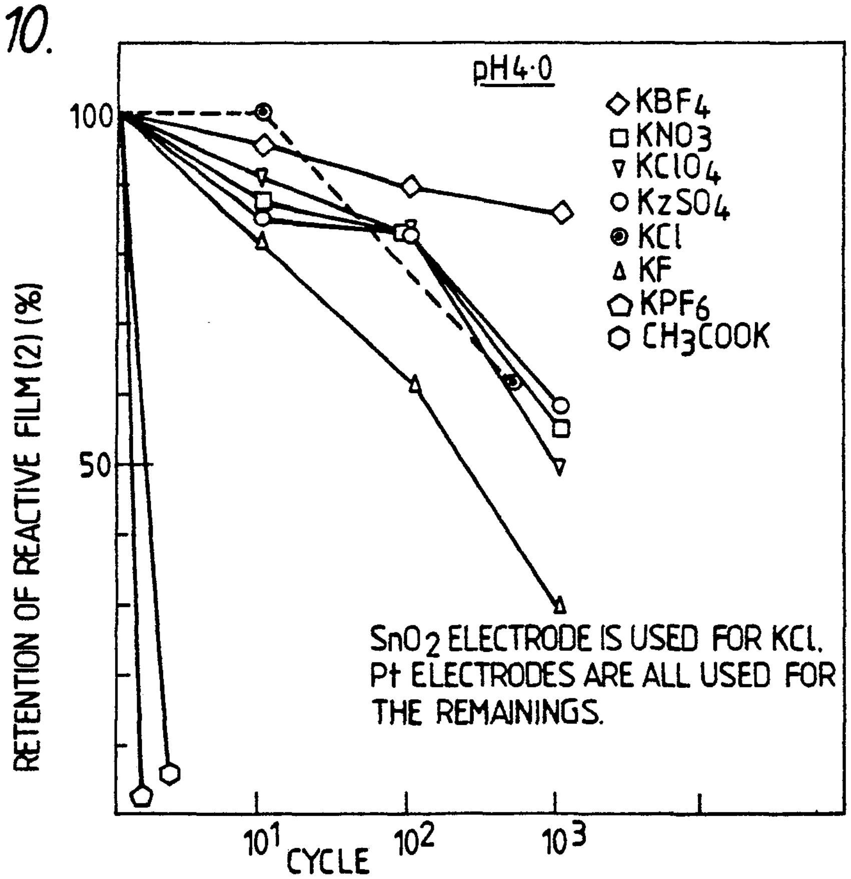
pH4·0
KBF4
KNO3
KClO4
K2SO4
KCl
KF
KPF6
CH3COOK
100
50
RETENTION OF REACTIVE FILM (2) (%)
10^1 CYCLE 10^2 10^3
SnO2 ELECTRODE IS USED FOR KCl.
Pt ELECTRODES ARE ALL USED FOR
THE REMAININGS.

Fig.11A.

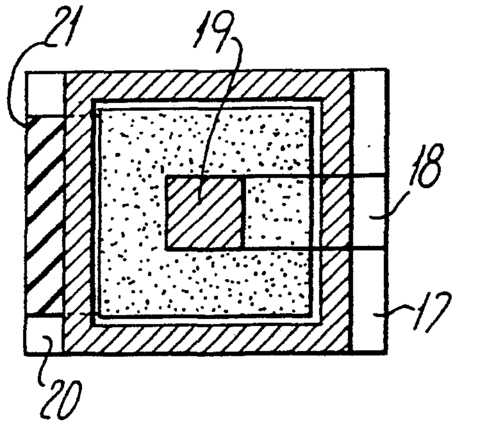


Fig.11B.

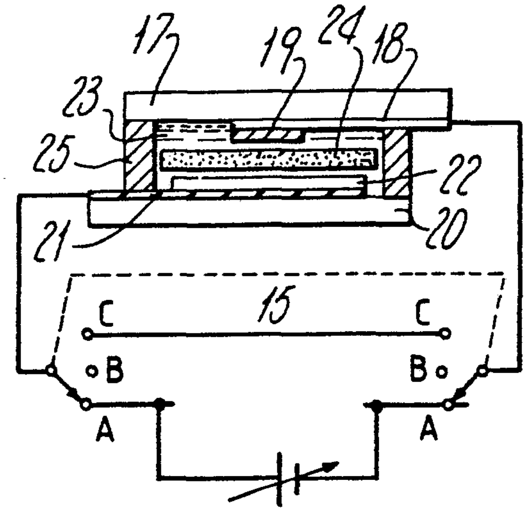


Fig.12A.

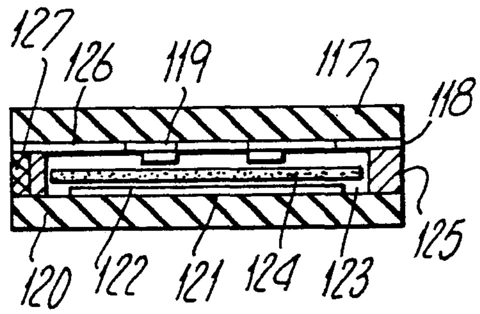


Fig.12B.

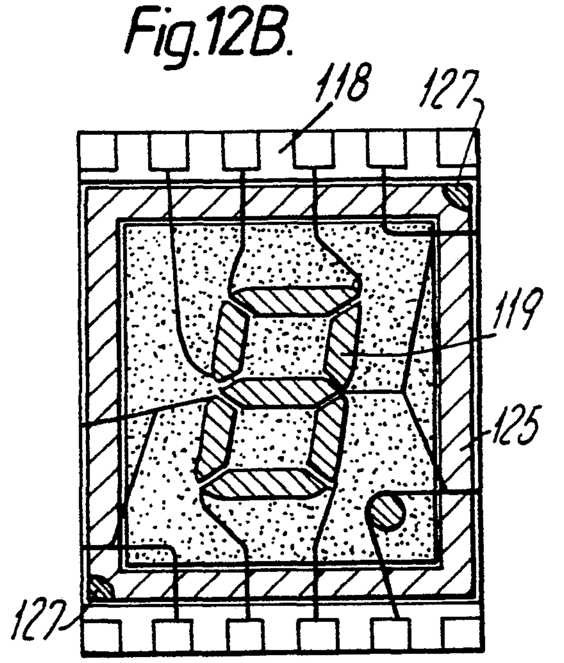

Fig.13.

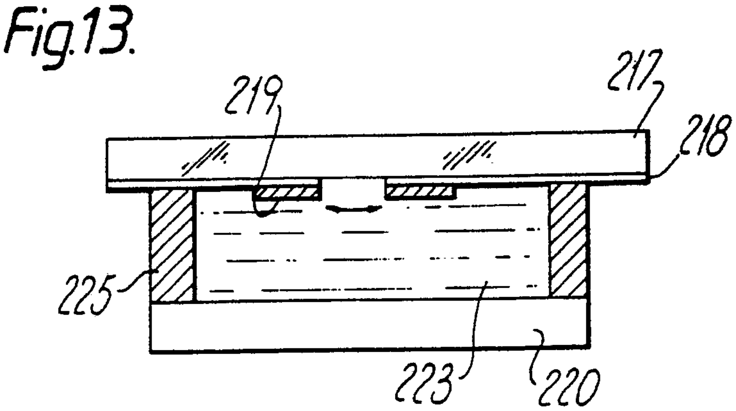


Fig.14.